Europäisches Patentamt

European Patent Office

Office européen des brevets

(19)

(11) Veröffentlichungsnummer : **0 033 962**
**B2**

# (12) NEUE EUROPÄISCHE PATENTSCHRIFT

(45) Veröffentlichungstag der neuen Patentschrift :
05.04.89

(21) Anmeldenummer : 81100873.9

(22) Anmeldetag : 07.02.81

(51) Int. Cl.⁴ : **B 23 K 11/06**

(54) **Verfahren zur Herstellung von längsnahtgeschweissten, gerundeten Zargen.**

(30) Priorität : 12.02.80 DE 3005083

(43) Veröffentlichungstag der Anmeldung :
19.08.81 Patentblatt 81/33

(45) Bekanntmachung des Hinweises auf die Patenterteilung : 11.04.84 Patentblatt 84/15

(45) Bekanntmachung des Hinweises auf die Entscheidung
über den Einspruch : 05.04.89 Patentblatt 89/14

(84) Benannte Vertragsstaaten :
AT BE CH DE FR GB IT LI LU NL SE

(56) Entgegenhaltungen :
CH--A-- 483 292
DE--A-- 1 613 730
DE--A-- 2 525 502
US--A-- 3 542 992
US--A-- 3 632 949
Fachkunde des Widerstandschweissens, Lorenz Pfeifer, Verlag W. Girardet, Essen 1969, S. 54-58
Firmenprospekt der Soudronic AG, "Warum Soudronic Frequenzwandler - Schweissmaschinen" Sep.
1979

(73) Patentinhaber : **L. SCHULER GmbH**
**Bahnhofstrasse 41 - 67 Postfach 1222**
**D-7320 Göppingen (DE)**

(72) Erfinder : **Belamaric, Zelimir**
**Rue de la Gare 28/II**
**CH-2074 Marin (CH)**
Erfinder : **Panknin, Walter, Prof. Dr.-Ing.**
**Einsteinweg 30**
**D-7320 Göppingen (DE)**
Erfinder : **Schalch, Fred**
**Ch. de Vertmont 5**
**CH-2525 Le Landeron (CH)**
Erfinder : **Schneider, Franz**
**Schottstrasse 14**
**D-7320 Göppingen (DE)**

EP 0 033 962 B2

## Beschreibung

Die Erfindung betrifft ein Verfahren zur Herstellung von längsnahtgeschweißten, gerundeten Zargen auf einer Widerstandsschweißmaschine, auf der sich überlappende Teile der Zargen durch zwei sich gegenüberliegend angeordnete Schweißelektrodenrollen geführt und kontinuierlich verschweißt werden, wobei die Schweißelektrodenrollen über Verbindungseinrichtungen mit einer elektrischen Energiequelle verbunden sind und die Energiequelle an den Schweißelektrodenrollen je Zarge einen nahezu rechteckigen Schweißstrom erzeugt, dessen Dauer einer Halbwelle der Förderzeit einer Zarge zwischen den Schweißelektrodenrollen angepaßt ist.

Bei einem bekannten Verfahren dieser Art (US-A-3 632 949) wird mit Gleichstrom gearbeitet, der aus einer Drei-Phasen-Wechselstrom-Quelle durch Gleichrichtung erzeugt sein kann, wobei die einzelnen Halbwellen gleicher Polarität einen nahezu rechteckförmigen Schweißstrom mit der Förderzeit einer Zarge angepaßter Dauer dadurch bilden, daß bei Beginn der Förderzeit jeder Zarge und bei Ende dieser Förderzeit jeweils der Gleichstrom ein- und wieder ausgeschaltet wird. Dies geschieht jeweils mit einem stufenlos oder stufenweise verzögerten Anstieg oder Abfall des Schweißstromes, um die Energiedarbietung dem bei diesem bekannten Verfahren verringerten Energiebedarf bei Beginn und Ende der Schweißnaht anzupassen. Dort ist jedoch weder der Schweißstrom über einen Schweißtransformator gebildet, noch ein Polaritätswechsel von Zarge zu Zarge möglich, noch eine Regelung der Energiedarbietung durch einen überlagerten, höherfrequenten Strom angestrebt.

Gemäß weiterem Stand der Technik (DE-A-16 13 730, CH-A-483 292) werden zur Herstellung von längsnahtgeschweißten, gerundeten Zargen Stromquellen verwendet, die einen periodischen, nahezu rechteckförmigen Strom an den Schweißelektrodenrollen erzeugen. Um eine möglichst qualitativ gute Schweißnaht zu erhalten, werden Wechselstromimpulse verwendet, die eine von der üblichen Netzfrequenz abweichende höhere Frequenz aufweisen. Durch die Verwendung von Wechselstrom kann die bei Gleichstromschweißung auftretende Gefahr der Bildung von Lichtbögen und der damit verbundenen Zerstörung der zu schweißenden Nahtstelle weitgehend vermieden werden. Die Verwendung von höherfrequentem Wechselstrom erfordert jedoch einen erheblichen schaltungstechnischen Aufwand, z. B. für die Steuerung des Beginnes und des Endes des Schweißvorganges, für die Steuerung der einzusetzenden Schweißleistung. Ein gewichtiger weiterer Nachteil der vorbekannten Schweißverfahren unter Verwendung von höherfrequentem Schweißstrom ist jedoch in der Erwärmung der Widerstandsschweißmaschine zu sehen, die durch Wirbelströme hervorgerufen wird. Außer den hierdurch entstehenden elektrischen Verlusten ist ein nicht vernachlässigbarer Aufwand zur Kühlung der Widerstandsschweißmaschine notwendig, wodurch der Wirkungsgrad weiter vermindert wird. Bei den meisten Widerstandsschweißmaschinen müssen außerdem für viele Bauteile spezielle, antimagnetische Werkstoffe verwendet werden, um die Erwärmung durch Wirbelströme in beherrschbaren Grenzen zu halten.

Die Aufgabe, die der Erfindung zugrundeliegt, ist, unter Vermeidung der Nachteile der bekannten Schweißverfahren ein Verfahren zur Herstellung von längsnahtgeschweißten, gerundeten Zargen anzugeben, mit dem eine kontinuierliche, unterbrechungsfreie Schweißnaht erstellt werden kann, wobei eine exakte Synchronisation des Beginnes und des Endes des Schweißvorganges sowie eine Regelung der Energiedarbietung während des Schweißvorganges möglich ist. Diese Aufgabe ist erfindungsgemäß dadurch gelöst, daß der Schweißstrom über einen Schweißtransformator mit niedriger übertragbarer unterer Grenzfrequenz gebildet wird, wobei von Zarge zu Zarge ein Polaritätswechsel durchgeführt und zur Regelung der der Zarge zugeführten elektrischen Energie dem nahezu rechteckförmigen Schweißstrom ein höherfrequenter Strom überlagert wird.

Vorteilhafte Weiterbildungen des Verfahrens sind den nachgeordneten Ansprüchen 2 und 3 zu entnehmen. Eine wesentliche und vorteilhafte Voraussetzung für die Durchführung des erfindungsgemäßen Verfahrens ist der Dimensionierung des Schweißtransformators gemäß den Ansprüchen 4 und 5 zuzumessen.

Durch das erfindungsgemäße Verfahren wird eine Erwärmung der Widerstandsschweißmaschine durch induktive Wirbelströme weitgehend vermieden. Eine kontinuierliche Schweißnaht wird erzielt, so daß bei dem erfindungsgemäßen Wechselstrom-Schweißverfahren von einer Quasi-Gleichstromschweißung gesprochen werden kann, da jeweils die Dauer einer Halbwelle des Schweißstromes genau der Schweißzeit einer Zarge entspricht. Der Polaritätswechsel von Zarge zu Zarge trägt zum Erreichen genauer Synchronisation dadurch bei, daß ein Schweißtransformator wegen des bei jeder Halbwelle in entgegengesetzter Richtung von $i = 0$ ansteigenden Schweißstromes nicht in Sättigung geht. Dadurch, daß dem nahezu rechteckförmigen Schweißstrom ein höherfrequenter Strom überlagert wird, kann die während des Schweißvorganges benötigte Energie, die von verschiedenen Faktoren — Fördergeschwindigkeit der Zargen, Dicke der zu verschweißenden Bleche usw. — abhängig ist, direkt geregelt werden. Diese Regelung ermöglicht das Vermeiden von Fehlstellen und damit Diskontinuitäten in jeder Schweißnaht.

Anhand einer Zeichnung ist die Erfindung nachfolgend näher erläutert. Es zeigen

Figur 1a eine Anzahl gerundeter Zargen, die mit einer vorgegebenen Geschwindigkeit transportiert werden,

Figur 1b die Kurvenform eines Schweißstromes synchron zu Fig. 1a,

Figur 1c die Kurvenform eines Schweißstromes synchron zu Fig. 1a, mit einem überlagerten höherfrequenten Stromanteil und Figur 2 eine Kennlinie eines Schweißtransformators in einem B/H-Diagramm.

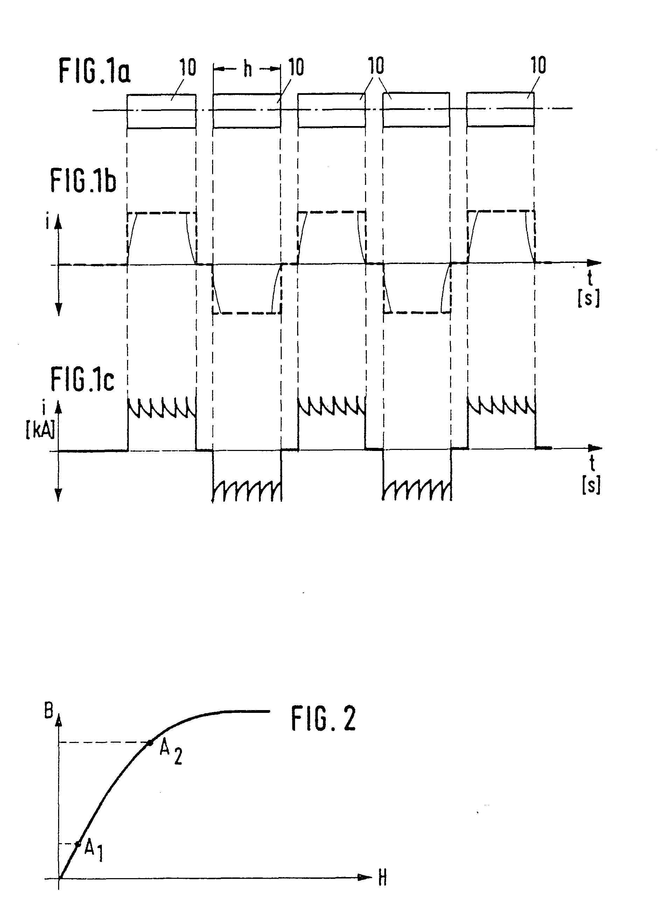

In Fig. 1a sind gerundete Zargen 10, z. B. Dosenzargen, gezeigt, die mit einer vorgegebenen Geschwindigkeit zwischen Schweißelektrodenrollen einer Widerstandsschweißmaschine gefördert und nahtverschweißt werden. Sobald eine Zarge 10 zwischen die Schweißelektrodenrollen gefördert ist, wird der Schweißstrom i eingeschaltet, der seine maximale Amplitude in kurzer Zeit, d.h. mit kleiner Zeitkonstante behaftet, erreicht und nun während der Förderzeit der Zarge zwischen den Schweißelektrodenrollen nahezu konstant bleibt. Exakt am Ende der geschweißten Zarge 10 wird der Schweißstrom i abgeschaltet. Der Anfang der folgenden Zarge 10 bewirkt, daß der Schweißstrom i wieder eingeschaltet wird, jedoch mit umgekehrter Polarität. Der Schweißvorgang ergibt sich, wie vorhergehend bereits beschrieben, wiederum durch einen nahezu konstanten Stromimpuls, dessen Dauer genau der Förderzeit der Zargen 10 zwischen den Schweißelektrodenrollen entspricht. Es ergibt sich hierbei also eine Wechselstrom-Widerstandsschweißung mit einer Frequenz des Schweißstromes, die proportional dem Verhältnis der Fördergeschwindigkeit der Zargen zur Zargenlänge ist.

Der in Fig. 1b gezeigte Schweißstrom i zeigt einen rechteckförmigen Verlauf. Durch Beeinflussung der Zeitkonstante des Schweißkreises bzw. der Spannungshöhe und -form kann die Steilheit, die als Stromänderung pro Zeiteinheit zu verstehen ist, bestimmt werden.

In einem Beispiel heißt das :

Bei einer Fördergeschwindigkeit $v_1 = 50$ m/min und einer Zargenhöhe $h = 125$ mm (entspricht einer 1 kg-Dose) werden bei Vernachlässigung des Abstandes zwischen den Zargen 6,67 Zargen/sec durch die Schweißelektrodenrollen gefördert. Die Frequenz des Schweißstromes i ergibt sich also zu $f_s = 3,3$ Hz, die ein Schweißtransformator einer elektrischen Energiequelle bei voller Schweißleistung übertragen muß.

Da überlicherweise auf einer Widerstandsschweißmaschine unterschiedliche Zargenhöhen verarbeitet werden, ergibt sich in einem weiteren Beispiel :

Fördergeschwindigkeit $v_2 = 50$ m/min, Zargenhöhe $h = 210$ mm, es werden also 3,97 Zargen/sec gefördert. Hieraus ergibt sich unter den gleichen Voraussetzungen wie bei dem vorhergehenden Beispiel die Frequenz des Schweißstroms i zu $f_s = 2$ Hz.

Durch Überlagerung eines höherfrequenten Stromes, wie in Fig. 1c gezeigt, ist die Regelung der der Schweißstelle zugeführten Energie, die bekanntlich proportional dem Quadrat der Amplitude des Schweißstromes i ist, möglich.

Um das Verfahren anwenden zu können, besteht eine wesentliche Voraussetzung darin, einen zugehörigen Schweißtransformator derart zu dimensionieren, daß die untere übertragbare Grenzfrequenz ohne Veränderung der Leistungsübertragung sehr niedrig gewählt ist. In dem vorhergehend beschriebenen Beispielen errechnet sich die untere Grenzfrequenz des Schweißstromes zum einen zu $f_s = 3,3$ Hz und zum anderen zu $f_s = 2$ Hz. Diese extrem niedrigen Frequenzen können jedoch bei einem Schweißtransformator nur dann erreicht werden, wenn der Arbeitspunkt $A_1$ auf der magnetischen Kennlinie so tief gewählt ist, daß eine Betriebsweise außerhalb der Sättigung (siehe Fig. 2, unterhalb $A_2$) sichergestellt ist.

Der eingangs bereits erwähnte schnelle Anstieg des Schweißstromes i wird durch Verminderung der Zeitkonstanten bzw. Beeinflussung der Spannungshöhe und -form erreicht, die den Anstieg des Schweißstromes nach einer e-Funktion gemäß den bekannten Gesetzmäßigkeiten bewirken. Die Zeitkonstante ergibt sich bekanntlich aus dem Verhältnis der Summe der induktiven Blindwiderstände zu der Summe der ohmschen Widerstände (Ersatzschaltbild eines Schweißkreises). Durch Verminderung der wirksamen Induktivitäten, z. B. durch möglichst konzentrische Anordnung der stromführenden Leiter usw., wird die Zeitkonstante wirksam vermindert.

In einer Mehrzahl von Anwendungsfällen ist es besonders vorteilhaft, wenn die Steilheit des Anstieges und Abfalls des Schweißstromes mittels der vorstehend geschilderten Maßnahmen gesteuert werden kann. Beim Anschweißen einer Zarge 10 und am Ende des Schweißvorganges kann hierdurch wirksam die Schweißung einer fehlerhaften Zarge 10 vermieden werden, da auch Fehlstellen durch zu schnellen Anstieg — Spritzen des Werkstoffes — oder zu späten Abfall — Entstehung einer überstehenden Schweißnase — des Schweißstromes verhindert werden. Durch die genaue Steuerung des Schweißbeginnes und des Schweißstromes i ist es möglich, einen Zargenabstand im Bereich der Schweißelektrodenrollen zu erreichen, der nahezu gleich Null ist.

Abschließend kann also aufgrund der vorhergehenden Ausführungen gesagt werden, daß durch das erfindungsgemäße Verfahren die Vorteile des Wechselstrom-Widerstandsschweißens und die des Gleichstrom-Widerstandsschweißens in einer vorteilhaften Kombination zusammenwirken.

**Patentansprüche**

1. Verfahren zur Herstellung von längsnahtgeschweißten, gerundeten Zargen (10) auf einer Widerstandsschweißmaschine, auf der sich überlappende Teile der Zargen (10) durch zwei sich gegenüberliegend angeordnete Schweißelektrodenrollen geführt und kontinuierlich verschweißt werden, wobei die Schweißelektrodenrollen über Verbindungseinrichtungen mit einer elektrischen Energiequelle verbunden sind und die Energiequelle an den Schweißelektrodenrollen je Zarge (10) einen nahezu rechteckförmigen Schweißstrom (i) erzeugt, dessen Dauer einer Halbwelle der Förderzeit einer Zarge (10) zwischen den Schweißelektrodenrollen angepaßt ist, dadurch gekennzeichnet, daß der Schweißstrom (i) über einen Schweißtransformator mit niedriger übertragbarer unterer Grenzfrequenz gebildet wird, wobei von Zarge (10) zu Zarge (10) ein Polaritätswechsel durchgeführt und zur Regelung der der Zarge (10) zugeführten elektrischen Energie dem nahezu rechteckförmigen Schweißstrom (i) ein höherfrequenter Strom überlagert wird.

2. Verfahren nach Anspruch 1, dadurch gekennzeichnet, daß die Zeitkonstante, die für den Anstieg und den Abfall des Schweißstromes (i) bestimmend ist, gesteuert wird.

3. Verfahren nach Anspruch 1, dadurch gekennzeichnet, daß bei vorgegebener Zeitkonstante die Steilheit des Anstieges und des Abfalles des Schweißstromes (i) gesteuert wird.

4. Schweißtransformator für die elektrische Energiequelle zur Durchführung des Verfahrens nach einem der Ansprüche 1 bis 3, dadurch gekennzeichnet, daß der Schweißtransformator für eine untere übertragbare Grenzfrequenz ausgelegt ist, die wesentlich durch das Verhältnis der Fördergeschwindigkeit zur Länge der Zarge bestimmt wird, und daß die Blechung aus weichmagnetischem Material in einem Umfang dimensioniert ist, die eine Bestimmung des Arbeitspunktes (A₁) auf der magnetischen Kennlinie im B/H-Diagramm zu Beginn des linearen Bereiches erlaubt.

5. Schweißtransformator nach Anspruch 4, dadurch gekennzeichnet, daß die Summe der wirksamen Induktivitäten klein aber größer als Null ist.

### Claims

1. Process for the manufacture of longitudinally welded, rounded frames (10) on a resistance-welding machine, on which overlapping portions of the frames (10) are guided through two welding-electrode rollers which are arranged opposite each other, and are continuously welded, the welding-electrode rollers being connected, via connecting devices, to an electrical power supply unit which generates a welding current (i) at the welding-electrode rollers per frame (10), the form of which current (i) is virtually rectangular and the duration of which is matched to a half-wave of the time required for conveying a frame (10) between the welding-electrode rollers characterized in that the welding current (i) is formed via a welding transformer with low transferable low-end cutoff frequency, a polarity change being performed from frame (10) to frame (10) and a higher frequency current being superposed on the virtually rectangular welding current (i) to regulate the electric energy supplied to the frame (10).

2. Process according to Claim 1, characterized in that the time constant which defines the rise and fall of the welding current (i) is controlled.

3. Process according to Claim 1, characterized in that, for a given time constant, the steepness of the rise and fall of the welding current (i) is controlled.

4. Welding transformer for the electrical power supply unit for carrying out the process according to one of Claims 1 to 3, characterized in that the welding transformer is designed for a transferable low-end cutoff frequency which is defined essentially by the ratio of the conveying speed to the length of the frame, and in that the core laminations, which are composed of a magnetically soft material, are designed to be of a size which enables the operating point (A₁) to be fixed at the beginning of the linear region on the magnetic characteristic curve in the B/H diagram.

5. Welding transformer according to Claim 4, characterized in that the sum of the effective inductances is small but is greater than zero.

### Revendications

1. Procédé pour la production de viroles rondes (10) soudées longitudinalement sur une machine à souder par résistance, sur laquelle les pièces des viroles (10) se recouvrant sont guidées par deux molettes de soudage en regard et soudées continûment, les molettes-électrodes de soudage étant reliées à une source d'énergie électrique par des dispositifs de liaison et la source d'énergie électrique délivrant à chaque virole (10) aux molettes de soudage un courant de soudage (i) pratiquement rectangulaire, dont la durée d'une alternance est adaptée au temps de transport d'une virole (10) entre deux molettes de soudage, caractérisé en ce que le courant de soudage (i) est formé par un transformateur de soudage dimensionné pour une basse fréquence limite inférieure transmissible, une inversion de polarité du courant est réalisée après chaque virole (10), et un courant de haute fréquence est superposé au courant de soudage (i) pratiquement rectangulaire pour le réglage de l'énergie électrique amenée à la virole (10).

2. Procédé selon la revendication 1, caractérisé par une commande de la constante de temps qui détermine la croissance et la décroissance du courant de soudage (i).

3. Procédé selon la revendication 1, caractérisé par une commande de la pente de croissance et de décroissance du courant de soudage (i), pour une constante de temps prédéterminée.

4. Transformateur de soudage pour la source d'énergie électrique servant à la mise en œuvre du procédé selon l'une quelconque des revendications 1 à 3, caractérisé en ce que le transformateur de soudage est dimensionné pour une fréquence limite inférieure transmissible essentiellement déterminée par le rapport de la vitesse de transport à la longueur de la virole, et les tôles en matériau magnétique doux sont dimensionnées de façon à permettre une détermination du point de fonctionnement (A₁) au début de la partie linéaire du diagramme B/H représentant la caractéristique magnétique.

5. Transformateur de soudage selon la revendication 4, caractérisé en ce que la somme des inductances effectives est faible, mais non nulle.

FIG.1a

10 ← h → 10 10 10

FIG.1b

i

t [s]

FIG.1c

i [kA]

t [s]

B

A₂

A₁

FIG. 2

H